# EUROPEAN PATENT SPECIFICATION

(11) **EP 4 321 402 B1**
(45) Date of publication and mention of the grant of the patent: **31.07.2024**
(21) Application number: 22189518.8
(22) Date of filing: 09.08.2022
(51) Int. Cl.: B60W 30/12, B60K 35/00, B60W 30/16, B60W 40/09, B60W 50/00, B60W 50/14

(54) **DRIVING MONITORING SYSTEM**
FAHRÜBERWACHUNGSSYSTEM
SYSTÈME DE SURVEILLANCE DE CONDUITE

(43) Date of publication of application: 14.02.2024
(73) Proprietor: Volvo Car Corporation, 40531 Göteborg (SE)
(72) Inventor: ESSMAN, Klara, 40531 Göteborg (SE); ZEIDLER, Fredrika, 40531 Göteborg (SE); ERIKSSON, Alexander, 40531 Göteborg (SE)
(74) Representative: Maiwald GmbH

(56) References cited:
- WO-A1-2022/009164
- DE-B3- 102021 003 073
- US-A1- 2017 305 434
- US-B1- 10 773 727
- CHRISTOPH HENDEL: "DIE TOP 3 DER BELIEBTESTEN FAHRERASSISTENZSYSTEME DER AUTOFAHRER", 6 July 2021 (2021-07-06), XP002808446, Retrieved from the Internet <URL:https://schaden.news/de/article/link/42379/fahrerassistenzsysteme-das-haelt-die-mehrheit-der-autofahrer-davon> [retrieved on 20230116]

## Description

### TECHNICAL FIELD

The present invention relates to a driving monitoring system for a vehicle, a vehicle comprising such a driving monitoring system, a driving monitoring method for a vehicle and a computer program element for performing such a driving monitoring method for a vehicle.

### BACKGROUND ART

When introducing new technology, it is important to make users aware of how to use their new features, particularly related to an Automated Driving function in their vehicle. User manuals have been developed in order to provide the users with information how to use different functionalities in a vehicle. Previously, physical user manuals have been used for this purpose. Today, the OEMs usually deliver a digital version of the user manual on their webpage, which is mostly generic. However, as the automotive industry is moving towards higher cadence for software releases, new functionality will be introduced to the users at a higher pace than before.

Beyond that, a method for increasing a percentage of automated driving operations in an at least partially automated vehicle, in which in turn a percentage of manual operations by a driver is reduced, is known from DE 10 2021 003 073 B3. The method comprises a model which is trained by data on a behavior of the driver, a behavior of the automated driving vehicle, a driving situations and/or environmental conditions. An aggregated data library is generated comprising a plurality of driver-specific data sets of several drivers. A potential utilization rate of an automated driving mode is determined by comparing data from the driver with data from a plurality of drivers.

Moreover, WO2022009164A discloses an informational system for a mobility vehicle for teaching a driver features of the mobility vehicle. The system comprises an automotive user interface through which the driver is provided with tips on features of the mobility vehicle that are seldom or not at all used by the driver. The system monitors an occurrence of different tip notification triggers and provides the driver with a tip when it is considered safe to notify the driver in order to avoid or limit a distraction of the driver from a driving task. The tip presented to the driver rely on parameters considered appropriate by a vehicle manufacturer.

### SUMMARY

Hence, there may be a need an improved system providing a customized user manual.

The problem is at least partially solved or alleviated by the subject matter of the independent claims of the present invention, wherein further examples are incorporated in the dependent claims. It should be noted that the aspects of the invention described in the following apply to the driving monitoring system for a vehicle, the vehicle comprising such a driving monitoring system, the driving monitoring method for a vehicle and the computer program element for performing such a driving monitoring method for a vehicle.

According to the present invention, a driving monitoring system for a vehicle is presented. The driving monitoring system comprises a data storage unit and a computing unit. The computing unit is connectable to an operational domain design system of the vehicle configured to provide automated operational information on an automated driving mode. The computing unit is further connectable to a powertrain monitoring system of the vehicle configured to provide ongoing operational information in a manual driving mode. The computing unit is further connectable to a navigation system of the vehicle configured to provide driving route information of the vehicle. The computing unit is configured to receive the automated operational information of an individual user from the operational domain design system, receive the ongoing operational information of the individual user from the powertrain monitoring system, receive driving route information of the vehicle from the navigation system of the vehicle, generate a new user-specific aggregated data set comprising at least the automated operational information of the individual user, ongoing operational information of the individual user and the driving route information of the individual user and store the new user-specific aggregated data set in the data storage unit. The computing unit is further configured to generate an aggregated data library in the data storage unit comprising a plurality of user-specific aggregated data sets of several users and determine a potential utilization rate of the automated driving mode by comparing the new user-specific aggregated data set and the plurality of the user-specific aggregated data sets stored in the aggregated data library of the data storage unit.

The driving monitoring system according to the present invention may provide customized user manuals and/or instructions to individual users based on their driving behavior. Such customized user manuals may implement new and fast-developing functionalities of the vehicle and encourage the user to utilize the new functionalities and/or optimize a current operation of the vehicle. In particular, the new functionalities may be linked to an assisted driving system and/or automated driving system. Accordingly, the driving monitoring system may keep the user in the loop during a growth and improvement of the functionalities of the vehicle and foster the user to increase a utilization of the automated driving system, which may lead to a reduction of a risk of potential accidents and increase vehicle's safety.

The data storage unit may be configured to store data generated by several sensors arranged in the vehicle and/or new data generated by the computing unit. The data storage unit may comprise internal to a computing device, such as a computer's SSD, or a removable device such as an external HDD or universal serial bus (USB) flash drive. There are also other types of medium element, including magnetic tape, compact discs (CDs) and non-volatile memory (NVM) cards. The data storage unit may be also a cloud-based data storage element.

The computing unit may be at least a part of an electronic computing unit (ECU) of the vehicle. The computing unit may include, for example, one or more central processing units (CPUs), graphics processing units (GPUs) dedicated to performing calculations/transactions and/or other processing devices. The computing unit may be able to communicate, control and/or retrieve information from the data storage unit via a wired or wireless connection.

The computing unit may be coupled with the operational domain design (ODD) system, which may be configured to provide automated operational information on the automated driving (AD) mode. The automated driving mode of the vehicle may be defined according to levels of autonomous driving between level 1 (driver assistance) and level 4 (full self-driving under certain conditions) according to SAE J3016.

The ODD system may be adapted to provide a description of the conditions, in which an autonomous vehicle is designed to operate safely. In particular, the ODD system may define a functional boundary of the automated driving mode, specify driving tasks/requirements and verify and validate an implemented AD behavior. The ODD system may be configured to adjust the automated operational information with respect to a driving behavior of the individual user. In other words, the ODD system may be able to provide a customized, i.e. user-specific, automated operational information. Accordingly, the computing unit may be able to receive the user-specific automated operational information of the individual user.

The computing unit may be also coupled with the powertrain monitoring system, which may be configured to provide ongoing operational information in the manual driving mode. The powertrain monitoring system may comprise a plurality of sensor elements monitoring the ongoing operational information and/or ongoing operational parameter of the vehicle, when the user drives the vehicle in the manual driving mode.

The sensor elements may be arranged inside and/or outside the vehicle to detect driving parameters, interior parameters and/or surrounding parameters of the vehicle. Accordingly, the sensor elements may comprise vehicle control sensor elements, vehicle monitoring sensor elements, environment monitoring sensor elements, driver monitoring sensor elements or the like. The vehicle control sensor elements may comprise a longitudinal acceleration/deceleration sensor element, a lateral acceleration /deceleration sensor element, a steering angle sensor element, etc. The monitoring sensor elements may also comprise optical sensor elements, acoustic sensor elements, temperature sensor elements, etc.

Thus, the ongoing operation information may comprise a user-specific driving parameter, which is based on the user's driving behavior. The user-specific driving parameter may be, for instance, related to operational decisions of the vehicle such as acceleration, braking, cruise control, lane changing, turning speed etc. Accordingly the powertrain monitoring unit may be able to provide user-specific ongoing operational information in the manual driving mode to the computing unit.

The computing unit may be also coupled with the navigation system of the vehicle, which may be configured to provide driving route information of vehicle. The navigation system may provide information on a real-time position of the vehicle. The navigation unit may utilize signals received from a position determination system such as satellite, radio and/or GSM (Global System for Mobile Communications) and a geographic information system such as topology, road, air and/or sea maps. Preferably, the navigation system may also utilize a high precision map data. The navigation system may generate navigation data based on the monitored travelling route of the vehicle.

The computing unit may be capable to generate a new aggregated data set of the individual user based on the collected automated operational information, ongoing operational information and the driving route information of the individual user. The aggregated data set may be applied to summarize information and draw conclusions. The aggregated data set may be acquired by combining individual level data such as the automated operational information, ongoing operational information and the driving route information. For example, raw data can be aggregated over a given time period to provide statistics such as average, minimum, maximum, sum, and count. Based on such analysis of the aggregated data set, insights of particular resources, trends and/or outcomes can be generated.

The newly generated user-specific aggregated data set may be stored in the data storage unit. Generating a new user-specific aggregated data set may be repeated in a predefined time period and/or predefined travelling period. For instance, the computing unit may be adapted to generate and store a new user-specific aggregated data set per second, minute, hour and/or per m, km etc. Further, the computing unit may also generate several user-specific aggregated data sets of various users and/or various vehicles. Such plurality of user-specific aggregated data sets stored in the data storage unit may form the aggregated data library. Thus, the aggregated data library may form various metrics on a fleet level.

The computing unit may be further adapted to compare the newly generated user-specific aggregated data set of the individual user with the aggregated data library. Specifically, the computing unit may be able to estimate, how long the individual user utilizes at least one operational functionality of the AD mode, and how long other users utilized a corresponding operational functionality of the AD mode in a same assessment period. The assessment period may be a driving period and/or a specific route section selected by the individual user. The period may be also the entire driving route. Additionally or alternatively, the computing unit may also estimate which and/or how many operational functionalities of the AD mode were applied by the individual user and other users by comparing the user-specific aggregated data sets on the fleet level, i.e. with the aggregated data library.

Based on assessment results, the computing unit may determine the potential utilization rate of the AD mode for the individual user. The term "potential utilization" may indicate that how much the individual user may improve the utilization of the AD mode at least in the assessment period. Further, the "utilization rate" may refer to an available capacity of one or more functionalities of the AD mode, which the individual user may further apply when driving the vehicle.

For instance, if the user uses the functionalities of the AD mode less than aggregated data sets on the fleet level, the user may be encouraged to use more functionalities. Even if the user uses more functionalities than aggregated data sets on the fleet level, the user may be still encouraged to maintain or further increase their utilization rate in relation to the entire availability of the AD mode. Hence, even though the individual user uses AD functionalities more than 90 % of other users on the respective road type, for example, the individual user may be still able to utilize further 30 % of the entire availability of the AD mode.

In other words, there may be also two-staged utilization rate available, i.e. at the first stage in relation to the aggregated data sets on the fleet level and at the second stage in relation to the AD function availability as determined by the system in the corresponding route and/or road conditions.

Accordingly, the individual user may receive customized information of the various functionalities, particularly of the AD mode, based on the user's driving behavior and/or preferences in order to improve driving safety and driving efficiency.

In an example, the computing unit may be configured to estimate the potential utilization rate of the automated driving mode for the individual user even though the AD mode is geographically limited in the selected assessment period. There may be a specific ODD portion in the ODD system, in which unsupervised AD mode may be available but limited due to location reasons and/or environmental constraints such as road conditions. In such case, the computing unit may also estimate how much the individual user could improve the utilization of the AD mode by comparing the user-specific aggregated data sets on the fleet level, i.e. with the aggregated data library, if such limitations would not exist.

In an example, each of the automated operational information and the ongoing operational information comprising at least one operational parameter related to driving time, a lane control, an acceleration control, a brake control, a distance to an adjacent object, a collision detection, a speed, a lane marker position relative to the vehicle, an active safety intervention and/or energy consumption.

The automated operational information and the ongoing operational information may be adapted to represent physical operational conditions of the vehicle. The automated operational information may be established at a manufacturing stage of the vehicle and/or adapted to the user's driving behavior monitored during the manual driving mode. Whereas the ongoing operational information may be generated based on one or more operational parameters monitored in real-time during travelling in the manual driving mode.

In an example, the potential utilization rate comprises a potential utilization time rate of the automated driving mode. The computing unit may determine the potential utilization rate based on the utilization time of the operational functionalities of the AD mode of the individual user, which may be compared with the utilization time of the operational functionalities of the AD mode stored in the aggregated data library. The computing unit may be capable to assess single utilization time of a specific operational functionality or collective utilization time of several operational functionalities for the selected assessment period.

Hence, the potential utilization time rate may be determined by comparing the single utilization time of the specific operational functionality of the AD mode of the individual user with the single utilization time of the corresponding operational functionality of the AD mode on the fleet level. Additionally or alternatively, the potential utilization time rate may be determined by comparing the collective utilization time of the several operational functionalities of the AD mode of the individual user with the collective utilization time of the corresponding operational functionalities of the AD mode on the fleet level. Thus, the potential utilization time rate may indicate available utilization time of the one or more functionalities of the AD mode.

In an example, the potential utilization rate further comprises a potential energy efficiency rate of the automated driving mode. The computing unit may determine the potential utilization rate based on the energy consumption of the AD mode of the individual user, which may be compared with the energy consumption of the AD mode stored in the aggregated data library for the selected assessment period. The energy consumption may refer to single energy consumption of a single operational functionality of the AD mode and/or collective energy consumption of several operational functionalities of the AD mode.

Hence, the potential energy efficiency rate may be determined by comparing the single energy consumption of a specific operational functionality of the AD mode of the individual user with the single energy consumption of the corresponding operational functionality on the fleet level. Additionally or alternatively, the potential energy efficiency rate may be determined by comparing the collective energy consumption of the several operational functionalities of the AD mode of the individual user with the collective energy consumption of the corresponding operational functionalities of the AD mode on the fleet level. Thus, the potential energy efficiency rate may indicate available energy saving capacity of the of the AD mode for the individual user.

In an example, the computing unit is further configured to determine at least one functionality of the automated driving mode to be performed and/or adjusted to improve the energy consumption based on the potential energy efficiency rate. The computing unit may be able to correlate the potential utilization time rate of the functionalities of the AD mode and the potential energy efficiency rate of the AD mode. Accordingly, the computing unit may determine, which operational functionality of the AD mode may be adjusted to increase the energy efficiency of the vehicle. The determined functionality may be an active functionality, which is currently utilized. In such case, the computing unit may further assess how the functionality can be optimized to save the energy consumption. Additionally or alternatively, the determined functionality may be deactivated functionality, which can be activated to optimize the energy consumption.

In an example, the functionality of the automated driving mode comprises at least an adaptive cruise control, automated lane change, a longitudinal driving assistance and/or a lateral driving assistance. The functionality of the AD mode may be linked to the levels of autonomous driving between level 1 (driver assistance) and level 4 (full self-driving under certain conditions) according to SAE J3016. The computing unit may determine the potential utilization rate of such operational function by comparing the user-specific aggregated data set of the individual user and the aggregated data library.

In an example, the computing unit is further configured to determine a safety score based on the potential utilization rate of the automated driving mode and the ongoing operational information, and the ongoing operational information further comprises a frequency of a sudden acceleration, a sudden brake and/or an activation of a warning signal. The ongoing operational information may also comprise information on the sudden acceleration, the sudden brake and/or the activation of a warning signal, which may indicate an unsteady intermittent event during travelling.

The computing unit may be adapted to receive such unsteady intermittent operational information, which may be also integrated in the user-specific aggregated data set. The computing unit may be further able to determine the safety score by comparing the user-specific aggregated data set of the individual user with the plurality of the user-specific aggregated data sets comprising the unsteady intermittent operational information stored in the aggregated data library of the data storage unit. In particular, the computing unit may estimate the safety score of the individual user based on the frequency of the unsteady intermittent events in relation to the user-specific aggregated data sets on the fleet level.

In an example, the safety score further comprises a predictive traffic flow score adapted to indicate an influence of the ongoing operational information of the individual user in a current traffic situation. The computing unit may be configured to determine the predictive traffic flow score reflecting the driving behavior or preference of the individual user in the current traffic situation.

In particular, the computing unit may compare the ongoing operational information of the individual user with the plurality of the user-specific aggregated data sets stored in the aggregated data library of the data storage unit taking into account the driving route information provided by the navigation system. Accordingly, the computing unit may estimate the predictive traffic flow score of the current driving mode of the individual user in relation to the user-specific aggregated data sets on the fleet level, which may show, how the traffic flow would appear when applying the user-specific aggregated data sets on the fleet level.

In an example, the driving monitoring system further comprises a displaying unit. The displaying unit is configured to display the potential utilization rate, the potential utilization time rate, the potential energy efficiency rate, the functionality of the automated driving mode to be performed and/or adjusted, the safety score and/or the predictive traffic flow score to the individual user. The displaying unit may be adapted to visually provide the determined rates and/or scores to the individual user. They may be displayed on the displaying unit by means of a numerical value and/or a diagram, which may help the user for better understanding.

In an example, the displaying unit is arrangeable in the vehicle and/or in a mobile device of the individual user. The displaying unit may be integrated in a Center Stack Display (SCD), Head Up Display (HUD), Drivers Information Module (DIM) and/or Infotainment Head Unit (IHU). Additionally or alternatively, the displaying unit may be also integrated in a mobile device of the individual user such as smartphone, a smartwatch, a tablet, etc. Hence, the user may be also able to access the rates and/or scores determined by comparing the new user-specific aggregated data set with the aggregated data library for the assessment period selected by the individual user and analyze respective driving performance of the user after travelling the vehicle.

In an example, the data storage unit is a cloud-based data storage unit and the data storage unit is configured to communicate with the computing unit via a wireless communication network. Thus, the data storage unit and the computing unit may comprise at least one wireless network element. The wireless network element may enable the data storage unit and the computing unit to communicate over the air. The wireless network element may comprise LTE, 5G, Wi-Fi, Bluetooth, NFC, etc.

In an example, the displaying unit may be also configured to communicate with the data storage unit and/or the computing unit via the wireless communication network.

In an example, the computing unit is configured to continuously update the potential utilization rate, the potential utilization time rate, the potential energy efficiency rate, the functionality of the automated driving mode to be performed and/or adjusted, the safety score and/or the predictive traffic flow score. The computing unit may be able to determine the mentioned rates and/or scores continuously in real-time or in predefined intervals. In other words, generating a new user-specific aggregated data set may be repeated continuously in real-time or in a predefined time interval and/or predefined travelling interval, which may allow the computing unit to determine a new potential utilization rate based on the currently generated user-specific aggregated data set.

The updated values and/or scores may be based on a user-specific aggregated data set newly generated during each interval, which may comprise at least the automated operational information of the individual user, ongoing operational information of the individual user and the driving route information of the individual user, which are also continuously updated. Hence, the user may be kept in the loop during a growth and improvement of the functionalities of the vehicle.

According to the present invention, a vehicle is presented. The vehicle may be configured for operating an automated driving mode. The vehicle comprises a driving monitoring system as described above and an operational domain design system, a powertrain monitoring system and a navigation system. The operational domain design system may be configured to provide the automated operational information on an automated driving mode. The powertrain monitoring system may be configured to provide the ongoing operational information and the navigation system may be configured to provide the driving route information of the vehicle. Accordingly, a computing unit of the driving monitoring system may provide customized user manuals and/or instructions to individual users based on their driving behavior.

According to the present invention, a driving monitoring method for a vehicle is presented. The method comprises
- receiving automated operational information of an individual user from an operational domain design system,
- receiving ongoing operational information of the individual user from a powertrain monitoring system,
- receiving driving route information of the vehicle from a navigation system of the vehicle,
- generating a new user-specific aggregated data set comprising at least the automated operational information of the individual user, ongoing operational information of the individual user and the driving route information of the individual user,
- storing the new user-specific aggregated data set in a data storage unit,
- generating an aggregated data library in the data storage unit comprising a plurality of user-specific aggregated data sets of several users, and
- determining a utilization rate of the automated driving mode by comparing the new user-specific aggregated data set and the plurality of the user-specific aggregated data sets stored in the aggregated data library of the data storage unit.

A computing unit is connectable to the operational domain design system of the vehicle configured to provide the automated operational information on an automated driving mode. The computing unit is connectable to the powertrain monitoring system of the vehicle configured to provide the ongoing operational information, and the computing unit is connectable to the navigation system of the vehicle configured to provide the driving route information of the vehicle.

According to the present invention, a computer program element is presented. The computer program element is configured for driving monitoring of a vehicle as described above, which, when being executed by a processing element, is adapted to perform the method steps of a method claim as described above.

According to the present invention, one or more computer storage media may be presented. The computer storage media may be encoded with instructions that, when executed by one or more computers, cause the one or more computers to perform the operations of the respective method as described above.

The computer storage media may comprise at least one memory device in any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the computing unit.

According to the present invention, a computer system may be also presented. The computer system may comprise one or more computer storage media as described above, and one or more computers for executing the instructions.

It should be noted that the above examples may be combined with each other irrespective of the aspect involved. Accordingly, the method may be combined with structural features and, likewise, the system may be combined with features described above with regard to the method.

These and other examples of the present invention will become apparent from and elucidated with reference to the embodiments described hereinafter.

### BRIEF DESCRIPTION OF DRAWINGS

Examples according to the present invention will be described in the following with reference to the following drawings.
- Fig. 1: shows schematically and exemplarily an example of a vehicle according to the present invention.
- Fig. 2: shows schematically and exemplarily an example of a flow chart of a method for driving monitoring according to the present invention.

### DESCRIPTION OF EXAMPLES

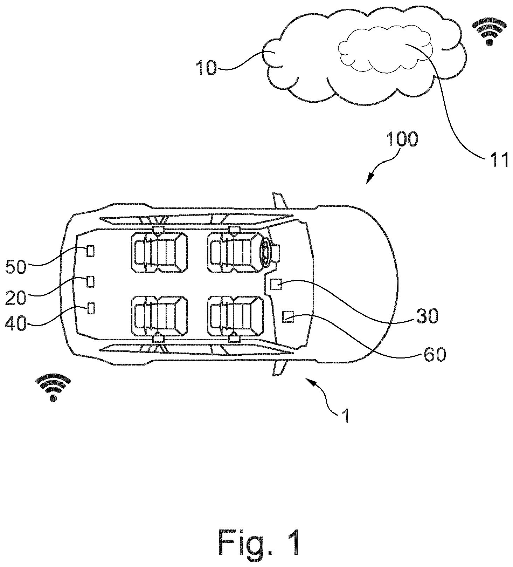

Fig. 1 shows a vehicle 100 adapted to be operated in an automated driving mode between level 1 (driver assistance) to level 4 (full self-driving under certain conditions) according to SAE 13016. The vehicle 100 comprises a driving monitoring system 1 for providing customized user manuals and/or instructions to individual users based on their driving behavior.

The vehicle 100 comprises further comprises an operational domain design system 40, a powertrain monitoring system 50 and a navigation system 60. The operational domain design (ODD) system 40 is configured to provide automated operational information on the automated driving mode. The powertrain monitoring system 50 is configured to provide ongoing operational information and the navigation system 60 is configured to provide driving route information of the vehicle 100.

The driving monitoring system 1 comprises a data storage unit 10 and a computing unit 20. The data storage unit 10 may be a cloud-based data storage unit. The computing unit 20 may be integrated in the vehicle 100 or at least partially operated over the air. The data storage unit 10 and the computing unit 20 are able to transmit data via a wireless network communication.

The driving monitoring system 1 further comprises a displaying unit 30, which can be arranged in the vehicle 100 and/or in a mobile device of the individual user and configured to display the information determined by the computing unit 20 on utilization information of the automated driving mode of the individual user.

The computing unit 20 is connectable to the ODD system 40 to receive the automated operational information of the individual user via a wired or wireless connection. The computing unit 20 is connectable to the powertrain monitoring system 50 to receive the ongoing operational information of the individual user via the wired or wireless connection. The computing unit 20 is also connectable to the navigation system to receive driving route information 60 via the wired or wireless connection.

Each of the automated operational information and the ongoing operational information comprises at least one operational parameter comprising driving time of the vehicle 100, lane control regarding a position of the vehicle 100 within the lane, acceleration/deceleration control, distance to the adjacent object such as surrounding vehicle, a pedestrian, etc., collision detection, speed of the vehicle 100, lane marker positon relative to the vehicle 100, etc.

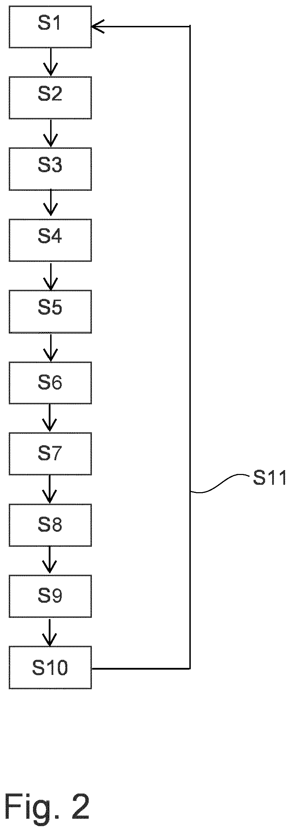

As shown in Fig. 2, the computing unit 20 is configured to perform the steps, but not necessarily in this order:

| | |
|---|---|
| S1: | receiving automated operational information of an individual user from an operational domain design system 40, |
| S2: | receiving ongoing operational information of the individual user from a powertrain monitoring system 50, |
| S3: | receiving driving route information of the vehicle 100 from a navigation system 60, |
| S4: | generating a new user-specific aggregated data set comprising at least the automated operational information of the individual user, ongoing operational information of the individual user and the driving route information of the individual user, |
| S5: | storing the new user-specific aggregated data set in a data storage unit 10, |
| S6: | generating an aggregated data library 11 in the data storage unit 10 comprising a plurality of user-specific aggregated data sets of several users, and |
| S7: | determining a utilization rate of the automated driving mode by comparing the new user-specific aggregated data set and the plurality of the user-specific aggregated data sets stored in the aggregated data library 11 of the data storage unit 10. |

The utilization rate comprises at least one of a potential utilization time rate, potential energy efficiency rate of the automated driving mode.

The computing unit 20 is further configured for

| | |
|---|---|
| S7: | determining at least one functionality of the automated driving mode to be performed and/or adjusted to improve the energy consumption based on the potential energy efficiency rate, wherein the functionality of the automated driving mode comprises an adaptive cruise control, automated lane change, a longitudinal driving assistance and/or a lateral driving assistance, |
| S8: | determine a safety score based on the potential utilization rate of the automated driving mode and the ongoing operational information, wherein the ongoing |
| | operational information further comprises a frequency of a sudden acceleration, a sudden brake and/or an activation of a warning signal, |
| S9: | determining a predictive traffic flow score adapted to indicate an influence of the ongoing operational information of the individual user in a current traffic situation, |
| S10: | displaying the potential utilization rate, the potential utilization time rate, the potential energy efficiency rate, the functionality of the automated driving mode to be performed and/or adjusted, the safety score and/or the predictive traffic flow score to the individual user, |
| S11: | continuously updating the potential utilization rate, the potential utilization time rate, the potential energy efficiency rate, the functionality of the automated driving mode to be performed and/or adjusted, the safety score and/or the predictive traffic flow score, based on a new user-specific aggregated data set comprising at least the automated operational information of the individual user, ongoing operational information of the individual user and the driving route information of the individual user, which are continuously updated. |

Accordingly, the individual user may receive customized information of the various functionalities, particularly of the AD mode, based on the user's driving behavior and/or preferences in order to improve driving safety and driving efficiency.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A driving monitoring system (1) for a vehicle (100), comprising,
- a data storage unit (10), and
- a computing unit (20),
the computing unit (20) being connectable to an operational domain design system (40) of the vehicle (100) configured to provide automated operational information on an automated driving mode,
the computing unit (20) being further connectable to a powertrain monitoring system (50) of the vehicle (100) configured to provide ongoing operational information in a manual driving mode, and
the computing unit (20) being further connectable to a navigation system (60) of the vehicle (100) configured to provide driving route information of the vehicle (100),
the computing unit (20) being configured to
- receive the automated operational information of an individual user from the operational domain design system (40),
- receive the ongoing operational information of the individual user from the powertrain monitoring system (50),
- receive driving route information of the vehicle (100) from the navigation system (60) of the vehicle (100),
- generate a new user-specific aggregated data set comprising at least the automated operational information of the individual user, ongoing operational information of the individual user and the driving route information of the individual user,
- store the new user-specific aggregated data set in the data storage unit (10),
- generate an aggregated data library in the data storage unit (10) comprising a plurality of user-specific aggregated data sets of several users, and
- determine a potential utilization rate of the automated driving mode by comparing the new user-specific aggregated data set and the plurality of the user-specific aggregated data sets stored in the aggregated data library (11) of the data storage unit (10).

2. The driving monitoring system (1) according to claim 1, each of the automated operational information and the ongoing operational information comprising at least one operational parameter related to driving time, a lane control, an acceleration control, a brake control, a distance to an adjacent object, a collision detection, and/or energy consumption.

3. The driving monitoring system (1) according to claim 1, the potential utilization rate comprising a potential utilization time rate of the automated driving mode.

4. The driving monitoring system (1) according to claim 1, the potential utilization rate further comprising a potential energy efficiency rate of the automated driving mode.

5. The driving monitoring system (1) according to any of the preceding claims, the computing unit (20) being further configured to determine at least one functionality of the automated driving mode to be performed and/or adjusted to improve the energy consumption based on the potential energy efficiency rate.

6. The driving monitoring system (1) according to the preceding claim, the functionality of the automated driving mode comprising at least an adaptive cruise control, a longitudinal driving assistance and/or a lateral driving assistance.

7. The driving monitoring system (1) according to any of the preceding claims, the computing unit (20) being further configured to determine a safety score based on the potential utilization rate of the automated driving mode and the ongoing operational information, and the ongoing operational information further comprising a frequency of a sudden acceleration, a sudden brake and/or an activation of a warning signal.

8. The driving monitoring system (1) according to the preceding claim, the safety score further comprising a predictive traffic flow score, and the predictive traffic flow score being adapted to indicate an influence of the ongoing operational information of the individual user in a current traffic situation.

9. The driving monitoring system (1) according to any of the preceding claims, further comprising a displaying unit, the displaying unit being configured to display the potential utilization rate, the potential utilization time rate, the potential energy efficiency rate, the functionality of the automated driving mode to be performed and/or adjusted, the safety score and/or the predictive traffic flow score to the individual user.

10. The driving monitoring system (1) according to the preceding claim, the displaying unit being arrangeable in the vehicle (100) and/or in a mobile device of the individual user.

11. The driving monitoring system (1) according to any of the preceding claims, the data storage unit (10) being a cloud-based data storage unit (10) and the data storage unit (10) being configured to communicate with the computing unit (20) via a wireless communication network.

12. The driving monitoring system (1) according to the preceding claim, the computing unit (20) being configured to continuously update the potential utilization rate, the potential utilization time rate, the potential energy efficiency rate, the functionality of the automated driving mode to be performed and/or adjusted, the safety score and/or the predictive traffic flow score.

13. A vehicle (100) comprising a driving monitoring system (1) according to any of preceding claims 1 to 12, the vehicle (100) further comprising an operational domain design system (40), a powertrain monitoring system (50) and a navigation system (60).

14. A driving monitoring method for a vehicle (100), comprising
- receiving (S1) automated operational information of an individual user from an operational domain design system,
- receiving (S2) ongoing operational information of the individual user from a powertrain monitoring system (50),
- receiving (S3) driving route information of the vehicle (100) from a navigation system (60) of the vehicle (100),
- generating (S4) a new user-specific aggregated data set comprising at least the automated operational information of the individual user, ongoing operational information of the individual user and the driving route information of the individual user,
- storing (S5) the new user-specific aggregated data set in a data storage unit (10),
- generating (S6) an aggregated data library (11) in the data storage unit (10) comprising a plurality of user-specific aggregated data sets of several users, and
- determining (S7) a utilization rate of the automated driving mode by comparing the new user-specific aggregated data set and the plurality of the user-specific aggregated data sets stored in the aggregated data library (11) of the data storage unit (10),
a computing unit (20) being connectable to the operational domain design system (40)of the vehicle (100) configured to provide the automated operational information on an automated driving mode,
the computing unit (20) being connectable to the powertrain monitoring system (50) of the vehicle (100) configured to provide the ongoing operational information, and
the computing unit (20) being connectable to the navigation system (60) of the vehicle (100) configured to provide the driving route information of the vehicle (100).

15. A computer program element, for driving monitoring of a vehicle (100), which, when being executed by a processing element, being adapted to perform the method steps of the method claim 14.

## Patentansprüche

1. Fahrüberwachungssystem (1) für ein Fahrzeug (100), umfassend
- eine Datenspeichereinheit (10) und
- eine Recheneinheit (20),
wobei die Recheneinheit (20) mit einem Betriebsbereichsentwurfssystem (40) des Fahrzeugs (100) verbindbar ist, das eingerichtet ist, um automatisierte Betriebsinformationen über einen automatisierten Fahrmodus bereitzustellen,
wobei die Recheneinheit (20) ferner mit einem Antriebsstrang-Überwachungssystem (50) des Fahrzeugs (100) verbindbar ist, das eingerichtet ist, um laufende Betriebsinformationen in einem manuellen Fahrmodus bereitzustellen, und
wobei die Recheneinheit (20) ferner mit einem Navigationssystem (60) des Fahrzeugs (100) verbindbar ist, das eingerichtet ist, um Fahrstreckeninformationen des Fahrzeugs (100) bereitzustellen,
wobei die Recheneinheit (20) eingerichtet ist zum
- Empfangen der automatisierten Betriebsinformationen eines einzelnen Benutzers von dem Betriebsbereichsentwurfssystem (40),
- Empfangen der laufenden Betriebsinformationen des einzelnen Benutzers von dem Antriebsstrang-Überwachungssystem (50),
- Empfangen von Fahrstreckeninformationen des Fahrzeugs (100) von dem Navigationssystem (60) des Fahrzeugs (100),
- Erzeugen eines neuen benutzerspezifischen aggregierten Datensatzes, der mindestens die automatisierten Betriebsinformationen des einzelnen Benutzers, die laufenden Betriebsinformationen des einzelnen Benutzers und die Fahrstreckeninformationen des einzelnen Benutzers umfasst,
- Speichern des neuen benutzerspezifischen aggregierten Datensatzes in der Datenspeichereinheit (10),
- Erzeugen einer aggregierten Datenbibliothek in der Datenspeichereinheit (10), die mehrere benutzerspezifische aggregierte Datensätze mehrerer Benutzer umfasst, und
- Bestimmen einer potenziellen Nutzungsrate des automatisierten Fahrmodus durch Vergleichen des neuen benutzerspezifischen aggregierten Datensatzes und der mehreren benutzerspezifischen aggregierten Datensätze, die in der aggregierten Datenbibliothek (11) der Datenspeichereinheit (10) gespeichert sind.

2. Fahrüberwachungssystem (1) nach Anspruch 1, wobei jede der automatisierten Betriebsinformationen und der laufenden Betriebsinformationen mindestens einen Betriebsparameter umfasst, der sich auf die Fahrzeit, eine Spursteuerung, eine Beschleunigungssteuerung, eine Bremssteuerung, einen Abstand zu einem benachbarten Objekt, eine Kollisionserfassung und/oder einen Energieverbrauch bezieht.

3. Fahrüberwachungssystem (1) nach Anspruch 1, wobei die potenzielle Nutzungsrate eine potenzielle Nutzungszeitrate des automatisierten Fahrmodus umfasst.

4. Fahrüberwachungssystem (1) nach Anspruch 1, wobei die potenzielle Nutzungsrate ferner eine potenzielle Energieeffizienzrate des automatisierten Fahrmodus umfasst.

5. Fahrüberwachungssystem (1) nach einem der vorhergehenden Ansprüche, wobei die Recheneinheit (20) ferner eingerichtet ist, um mindestens eine Funktionalität des automatisierten Fahrmodus zu bestimmen, die durchzuführen und/oder einzustellen ist, um den Energieverbrauch basierend auf der potenziellen Energieeffizienzrate zu verbessern.

6. Fahrüberwachungssystem (1) nach dem vorhergehenden Anspruch, wobei die Funktionalität des automatisierten Fahrmodus mindestens eine adaptive Geschwindigkeitsregelung, eine Längsfahrhilfe und/oder eine Querfahrhilfe umfasst.

7. Fahrüberwachungssystem (1) nach einem der vorhergehenden Ansprüche, wobei die Recheneinheit (20) ferner eingerichtet ist, um eine Sicherheitsbewertung basierend auf der potenziellen Nutzungsrate des automatisierten Fahrmodus und den laufenden Betriebsinformationen zu bestimmen, und die laufenden Betriebsinformationen ferner eine Häufigkeit einer plötzlichen Beschleunigung, einer plötzlichen Bremsung und/oder einer Aktivierung eines Warnsignals umfassen.

8. Fahrüberwachungssystem (1) nach dem vorhergehenden Anspruch, wobei die Sicherheitsbewertung ferner eine prädiktive Verkehrsflussbewertung umfasst und die prädiktive Verkehrsflussbewertung ausgelegt ist, um einen Einfluss der laufenden Betriebsinformationen des einzelnen Benutzers in einer aktuellen Verkehrssituation anzugeben.

9. Fahrüberwachungssystem (1) nach einem der vorhergehenden Ansprüche, ferner umfassend eine Anzeigeeinheit, wobei die Anzeigeeinheit eingerichtet ist, um dem einzelnen Benutzer die potenzielle Nutzungsrate, die potenzielle Nutzungszeitrate, die potenzielle Energieeffizienzrate, die Funktionalität des automatisierten Fahrmodus, der durchzuführen und/oder einzustellen ist, die Sicherheitsbewertung und/oder die prädiktive Verkehrsflussbewertung anzuzeigen.

10. Fahrüberwachungssystem (1) nach dem vorhergehenden Anspruch, wobei die Anzeigeeinheit in dem Fahrzeug (100) und/oder in einem mobilen Gerät des einzelnen Benutzers angeordnet werden kann.

11. Fahrüberwachungssystem (1) nach einem der vorhergehenden Ansprüche, wobei die Datenspeichereinheit (10) eine Cloudbasierte Datenspeichereinheit (10) ist und die Datenspeichereinheit (10) eingerichtet ist, um mit der Recheneinheit (20) über ein drahtloses Kommunikationsnetzwerk zu kommunizieren.

12. Fahrüberwachungssystem (1) nach dem vorhergehenden Anspruch, wobei die Recheneinheit (20) eingerichtet ist, um die potenzielle Nutzungsrate, die potenzielle Nutzungszeitrate, die potenzielle Energieeffizienzrate, die Funktionalität des automatisierten Fahrmodus, der durchzuführen und/oder einzustellen ist, die Sicherheitsbewertung und/oder die prädiktive Verkehrsflussbewertung kontinuierlich zu aktualisieren.

13. Fahrzeug (100), umfassend ein Fahrüberwachungssystem (1) nach einem der vorhergehenden Ansprüche 1 bis 12, wobei das Fahrzeug (100) ferner ein Betriebsbereichsentwurfssystem (40), ein Antriebsstrang-Überwachungssystem (50) und ein Navigationssystem (60) umfasst.

14. Fahrüberwachungsverfahren für ein Fahrzeug (100), umfassend
- Empfangen (S1) von automatisierten Betriebsinformationen eines einzelnen Benutzers von einem Betriebsbereichsentwurfssystem,
- Empfangen (S2) der laufenden Betriebsinformationen des einzelnen Benutzers von einem Antriebsstrang-Überwachungssystem (50),
- Empfangen (S3) von Fahrstreckeninformationen des Fahrzeugs (100) von einem Navigationssystem (60) des Fahrzeugs (100),
- Erzeugen (S4) eines neuen benutzerspezifischen aggregierten Datensatzes, der mindestens die automatisierten Betriebsinformationen des einzelnen Benutzers, die laufenden Betriebsinformationen des einzelnen Benutzers und die Fahrstreckeninformationen des einzelnen Benutzers umfasst,
- Speichern (S5) des neuen benutzerspezifischen aggregierten Datensatzes in einer Datenspeichereinheit (10),
- Erzeugen (S6) einer aggregierten Datenbibliothek (11) in der Datenspeichereinheit (10), die mehrere benutzerspezifische aggregierte Datensätze mehrerer Benutzer umfasst, und
- Bestimmen (S7) einer Nutzungsrate des automatisierten Fahrmodus durch Vergleichen des neuen benutzerspezifischen aggregierten Datensatzes und der mehreren benutzerspezifischen aggregierten Datensätze, die in der aggregierten Datenbibliothek (11) der Datenspeichereinheit (10) gespeichert sind,
wobei eine Recheneinheit (20) mit dem Betriebsbereichsentwurfssystem (40) des Fahrzeugs (100) verbindbar ist, das eingerichtet ist, um die automatisierten Betriebsinformationen über einen automatisierten Fahrmodus bereitzustellen,
wobei die Recheneinheit (20) mit dem Antriebsstrang-Überwachungssystem (50) des Fahrzeugs (100) verbindbar ist, das eingerichtet ist, um die laufenden Betriebsinformationen bereitzustellen, und
wobei die Recheneinheit (20) mit dem Navigationssystem (60) des Fahrzeugs (100) verbindbar ist, das eingerichtet ist, um die Fahrstreckeninformationen des Fahrzeugs (100) bereitzustellen.

15. Computerprogrammelement zum Fahrüberwachen eines Fahrzeugs (100), das, wenn es durch ein Verarbeitungselement ausgeführt wird, ausgelegt ist, um die Verfahrensschritte des Verfahrens nach Anspruch 14 durchzuführen.

## Revendications

1. Système de surveillance de conduite (1) pour un véhicule (100), comprenant :
- une unité de stockage de données (10) et
- une unité de calcul (20),
l'unité de calcul (20) pouvant être connectée à un système de conception de domaine opérationnel (40) du véhicule (100) configuré pour fournir des informations opérationnelles automatisées sur un mode de conduite autonome,
l'unité de calcul (20) pouvant en outre être connectée à un système de surveillance de groupe motopropulseur (50) du véhicule (100) configuré pour fournir des informations opérationnelles continues dans un mode de conduite manuelle, et
l'unité de calcul (20) pouvant en outre être connectée à un système de navigation (60) du véhicule (100) configuré pour fournir des informations d'itinéraire de conduite du véhicule (100),
l'unité de calcul (20) étant configurée pour :
- recevoir les informations opérationnelles automatisées d'un utilisateur individuel provenant du système de conception de domaine opérationnel (40),
- recevoir les informations opérationnelles continues de l'utilisateur individuel provenant du système de surveillance de groupe motopropulseur (50),
- recevoir les informations d'itinéraire de conduite du véhicule (100) provenant du système de navigation (60) du véhicule (100),
- générer un nouvel ensemble de données agrégées spécifiques à l'utilisateur comprenant au moins les informations opérationnelles automatisées de l'utilisateur individuel, les informations opérationnelles continues de l'utilisateur individuel et les informations d'itinéraire de conduite de l'utilisateur individuel,
- stocker le nouvel ensemble de données agrégées spécifiques à l'utilisateur dans l'unité de stockage de données (10),
- générer une bibliothèque de données agrégées dans l'unité de stockage de données (10) comprenant une pluralité d'ensembles de données agrégées spécifiques à l'utilisateur, de plusieurs utilisateurs, et
- déterminer un taux d'utilisation potentielle du mode de conduite autonome en comparant le nouvel ensemble de données agrégées spécifiques à l'utilisateur et la pluralité des ensembles de données agrégées spécifiques à l'utilisateur stockés dans la bibliothèque de données agrégées (11) de l'unité de stockage de données (10).

2. Système de surveillance de conduite (1) selon la revendication 1, chacune des informations opérationnelles automatisées et des informations opérationnelles continues comprenant au moins un paramètre opérationnel lié à un temps de conduite, à un maintien sur la voie, à une commande d'accélération, à une commande de freinage, à une distance par rapport à un objet adjacent, à une détection de collision et/ou à une consommation d'énergie.

3. Système de surveillance de conduite (1) selon la revendication 1, le taux d'utilisation potentielle comprenant un taux de temps d'utilisation potentiel du mode de conduite autonome.

4. Système de surveillance de conduite (1) selon la revendication 1, le taux d'utilisation potentielle comprenant en outre un taux d'efficacité énergétique potentielle du mode de conduite autonome.

5. Système de surveillance de conduite (1) selon l'une quelconque des revendications précédentes, l'unité de calcul (20) étant en outre configurée pour déterminer au moins une fonctionnalité du mode de conduite autonome à exécuter et/ou à ajuster pour améliorer la consommation d'énergie sur la base du taux d'efficacité énergétique potentielle.

6. Système de surveillance de conduite (1) selon la revendication précédente, la fonctionnalité du mode de conduite autonome comprenant au moins un régulateur de vitesse adaptatif, une aide à la conduite longitudinale et/ou une aide à la conduite latérale.

7. Système de surveillance de conduite (1) selon l'une quelconque des revendications précédentes, l'unité de calcul (20) étant en outre configurée pour déterminer un score de sécurité basé sur le taux d'utilisation potentielle du mode de conduite autonome et les informations opérationnelles continues, et les informations opérationnelles continues comprenant en outre une fréquence d'une accélération brusque, d'un freinage brusque et/ou d'une activation d'un signal d'avertissement.

8. Système de surveillance de conduite (1) selon la revendication précédente, le score de sécurité comprenant en outre un score d'écoulement prédictif du trafic, et le score d'écoulement prédictif du trafic étant adapté pour indiquer une influence des informations opérationnelles continues de l'utilisateur individuel dans une situation de trafic actuelle.

9. Système de surveillance de conduite (1) selon l'une quelconque des revendications précédentes, comprenant en outre une unité d'affichage, l'unité d'affichage étant configurée pour afficher le taux d'utilisation potentielle, le taux de temps d'utilisation potentiel, le taux d'efficacité énergétique potentielle, la fonctionnalité du mode de conduite autonome à exécuter et/ou ajuster, le score de sécurité et/ou le score d'écoulement prédictif du trafic, à l'utilisateur individuel.

10. Système de surveillance de conduite (1) selon la revendication précédente, l'unité d'affichage pouvant être agencée dans le véhicule (100) et/ou dans un dispositif mobile de l'utilisateur individuel.

11. Système de surveillance de conduite (1) selon l'une quelconque des revendications précédentes, l'unité de stockage de données (10) étant une unité de stockage de données en nuage (10) et l'unité de stockage de données (10) étant configurée pour communiquer avec l'unité de calcul (20) via un réseau de communication sans fil.

12. Système de surveillance de conduite (1) selon la revendication précédente, l'unité de calcul (20) étant configurée pour mettre à jour en continu le taux d'utilisation potentielle, le taux de temps d'utilisation potentiel, le taux d'efficacité énergétique potentielle, la fonctionnalité du mode de conduite autonome à exécuter et/ou ajuster, le score de sécurité et/ou le score d'écoulement prédictif du trafic.

13. Véhicule (100) comprenant un système de surveillance de conduite (1) selon l'une quelconque des revendications 1 à 12 précédentes, le véhicule (100) comprenant en outre un système de conception de domaine opérationnel (40), un système de surveillance de groupe motopropulseur (50) et un système de navigation (60).

14. Procédé de surveillance de conduite pour un véhicule (100), comprenant de :
- recevoir (S1) des informations opérationnelles automatisées d'un utilisateur individuel provenant d'un système de conception de domaine opérationnel,
- recevoir (S2) des informations opérationnelles continues de l'utilisateur individuel provenant d'un système de surveillance du groupe motopropulseur (50),
- recevoir (S3) des informations d'itinéraire de conduite du véhicule (100) provenant d'un système de navigation (60) du véhicule (100),
- générer (S4) un nouvel ensemble de données agrégées spécifiques à l'utilisateur comprenant au moins les informations opérationnelles automatisées de l'utilisateur individuel, les informations opérationnelles continues de l'utilisateur individuel et les informations d'itinéraire de conduite de l'utilisateur individuel,
- stocker (S5) le nouvel ensemble de données agrégées spécifiques à l'utilisateur dans une unité de stockage de données (10),
- générer (S6) une bibliothèque de données agrégées (11) dans l'unité de stockage de données (10) comprenant une pluralité d'ensembles de données agrégées spécifiques à l'utilisateur, de plusieurs utilisateurs, et
- déterminer (S7) un taux d'utilisation du mode de conduite autonome en comparant le nouvel ensemble de données agrégées spécifiques à l'utilisateur et la pluralité des ensembles de données agrégées spécifiques à l'utilisateur stockés dans la bibliothèque de données agrégées (11) de l'unité de stockage de données (10),
une unité de calcul (20) pouvant être connectée au système de conception de domaine opérationnel (40) du véhicule (100) configuré pour fournir les informations opérationnelles automatisées sur un mode de conduite autonome,
l'unité de calcul (20) pouvant être connectée au système de surveillance de groupe motopropulseur (50) du véhicule (100) configuré pour fournir les informations opérationnelles continues, et
l'unité de calcul (20) pouvant être connectée au système de navigation (60) du véhicule (100) configuré pour fournir les informations d'itinéraire de conduite du véhicule (100) .

15. Élément de programme informatique pour la surveillance de conduite d'un véhicule (100) qui, lorsqu'il est exécuté par un élément de traitement, est adapté pour mettre en œuvre les étapes de procédé de la revendication de procédé 14.
